# EUROPEAN PATENT APPLICATION

(11) **EP 0 573 709 A1**
(43) Date of publication of application: **15.12.1993**
(21) Application number: 92305218.7
(22) Date of filing: 08.06.1992
(51) Int. Cl.: B60J 7/08

(54) **Vehicle opening roof**

(71) Applicant: Britax Weathershields Limited, Birmingham B5 7EH (GB)
(72) Inventor: Parsonage, Allan, The Hamlet, Perton, Wolverhampton (GB); Knowles, Leslie Hugh, Litchfield, Staffordshire (GB)
(74) Representative: Hollinghurst, Antony

(57) **Abstract**

An opening roof for a motor vehicle has a frame for mounting in an opening in a vehicle roof and a trim member (20) attached to the bottom of the frame so as to project outwardly therefrom. The trim member (20) includes a housing (40) accommodating a unit (50) comprising at least one transducer (46, 48) of an intruder alarm system of the type in which a transmitter (46) is arranged to emit electromagnetic or acoustic waves into the interior of the vehicle and a receiver (48) is arranged to detect reflections of said emitted waves from the structure of the vehicle, intrusion into the interior of the vehicle being detected by measuring disturbances in the pattern of said received reflections.

## Description

This invention relates to an opening roof for a vehicle of the type comprising a frame adapted to be mounted in an opening in a vehicle roof, movable closure means mounted in the frame, and a trim member attached to the bottom of the frame so as to project outwardly therefrom, the trim member including a housing for accommodating a unit which has electrical connections to apparatus at a location on the vehicle remote from the roof opening.

According to the invention, in an opening roof of the type described above, the unit comprises at least one transducer of an intruder alarm system of the type in which a transmitter is arranged to emit electromagnetic or acoustic waves into the interior of the vehicle and a receiver is arranged to detect reflections of said emitted waves from the structure of the vehicle, intrusion into the interior of the vehicle being detected by measuring disturbances in the pattern of said received reflections.

Since installation of an opening roof in a vehicle involves detaching some of the roof trim in the vicinity of the opening, installation of electrical wiring in a concealed position behind the roof trim is facilitated.

An embodiment of the invention will now be described, by way of example, with reference to the accompanying drawings, in which:
Figure 1 is a perspective view of the top of a motor car having an opening roof in accordance with the invention;
Figure 2 is a plan view from below (i.e., from within the vehicle), of an opening roof in accordance with the invention, with the closure means removed;
Figure 3 is a perspective view of part of the trim member of the opening roof shown in Figure 2; and
Figure 4 is a block schematic diagram of an intruder alarm for incorporation into an opening roof in accordance with the invention.

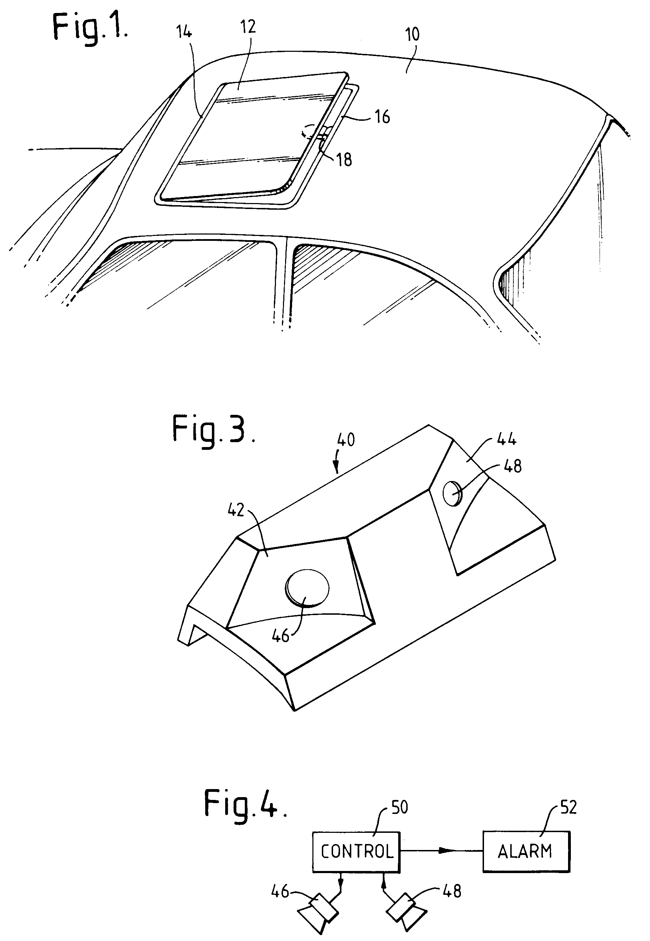

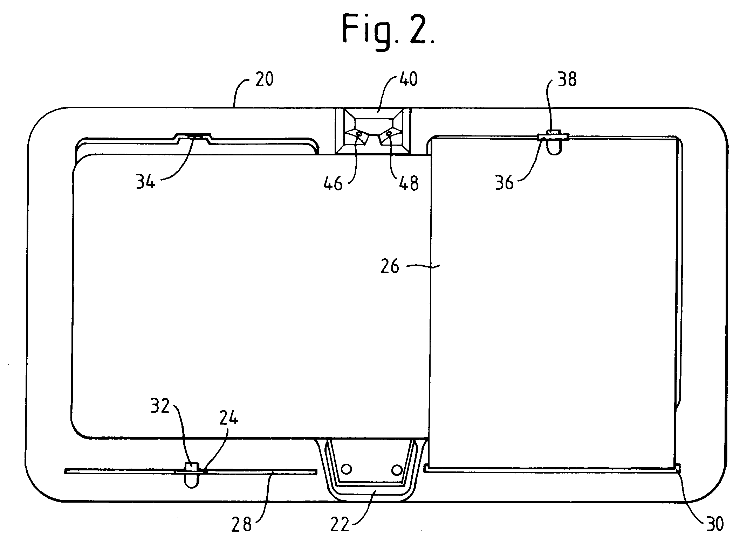

Referring to Figure 1, a roof 10 of a motor vehicle has an opening which is filled by a glass panel 12 which is hinged along its leading edge 14 to a frame 16 which bounds the opening. An opening mechanism 18 at the rear of the panel 12 is arranged to hold the panel 12 in a fully opened position, as illustrated, or in a fully closed position in which the panel 12 is level with the vehicle roof 10.

Figure 2 shows a trim ring 20 which is secured to the underside of the frame 16 and which includes an integral shroud 22 for surrounding a handle (not shown) of the opening mechanism 18. Two flexible fabric sunblinds 24 and 26 are mounted on rollers which are concealed behind the trim ring 20, the two blinds being protractable through respective slots 28 and 30. The blind 24 is shown in the fully retracted position in which a catch 32 prevents its free end from being withdrawn completely through the slot 28. On the opposite side of the opening, the trim ring 20 has a slot 34 in which the catch 32 can engage when the sunblind 24 is deployed. The sunblind 26 is shown in the deployed position with its catch 36 engaging in a slot 38 in the trim ring 20.

In accordance with the invention, a housing 40 for accommodating the transducers of an intruder alarm is mounted on the trim ring opposite to the shroud 22 for the handle of the opening mechanism. As can be seen from Figure 3, the housing has two outwardly directed faces 42 and 44. A transmitting transducer 46 is mounted in the face 42 and a receiving transducer 48 in the face 44. The housing 40 is preferably a separate unit which is detachably connected to the rest of the trim ring 20 so as to facilitate repair or replacement of either of the transducers 46 and 48 if necessary.

Referring to Figure 4, the transducers 46 and 48 are connected to an electronic control unit 50 which supplies an electrical signal to the transducer 46 so that the latter emits an ultrasonic acoustic signal. The receiving transducer 48 is oriented so as not to receive a direct signal from the transmitting transducer. Consequently, the receiving transducer 48 receives a signal formed from multiple reflections of the transmitted acoustic signal from the various surfaces within the passenger compartment of the vehicle. The control unit 50 detects any variation in the received signal pattern due to intrusion of an additional reflecting surface into the passenger compartment of the vehicle and, if any such intrusion is detected, supplies an output signal to an alarm unit 52 which may include an integral siren or which may alternatively or additionally be connected to the horn and/or lights of the vehicle.

The shroud 22 for surrounding a handle (not shown) of the opening mechanism 18 need not be integral with the trim ring 20.

The control unit 50 may be accommodated within the housing 40. The alarm 52 may also be accommodated within the housing 40, in which the only electrical connection required is a power supply.

The alarm system illustrated in Figure 4 is known per se.

## Claims

1. An opening roof for a motor vehicle comprising a frame (16) adapted to be mounted in an opening in a vehicle roof (10), movable closure means (12) mounted in the frame (12), and a trim member (20) attached to the bottom of the frame (12) so as to project outwardly therefrom, the trim member (20) including a housing accommodating a unit (40) which has electrical connections to apparatus at a location on the vehicle remote from the roof opening, characterised in that the unit (40) comprises at least one transducer (46, 48) of an intruder alarm system of the type in which a transmitter is arranged to emit electromagnetic or acoustic waves into the interior of the vehicle and a receiver is arranged to detect reflections of said emitted waves from the structure of the vehicle, intrusion into the interior of the vehicle being detected by measuring disturbances in the pattern of said received reflections.

2. An opening roof according to claim 1, wherein the unit (40) comprises the transmitter (46) of the intruder alarm system.

3. An opening roof according to claim 1 or 2, wherein the unit (40) comprises the receiver (48) of the intruder alarm system.

4. An opening roof according to claim 2 or 3, wherein the transmitter (46) of the intruder alarm system emits electromagnetic waves.

5. An opening roof according to claim 4, wherein the waves are in the infrared waveband.

6. An opening roof according to claim 2 or 3, wherein the transmitter (46) of the intruder alarm system emits acoustic waves.

7. An opening roof according to claim 6, wherein the waves are in the ultra-sonic waveband.
